# EUROPÄISCHE PATENTSCHRIFT

(11) **EP 1 778 485 B1**
(45) Veröffentlichungstag und Bekanntmachung des Hinweises auf die Patenterteilung: **02.10.2013**
(21) Anmeldenummer: 05784673.5
(22) Anmeldetag: 09.08.2005
(51) Int. Cl.: B32B 27/28, B32B 27/32, B32B 27/30

(54) **FORMTEIL AUS EINER INNENSCHICHT UND EINER DECKSCHICHT UND VERWENDUNG VON ARTGLEICHEM MATERIAL BEIM AUFBRINGEN EINER ZWISCHENSCHICHT AUF EIN FORMTEIL**
SHAPED PART COMPRISED OF AN INNER LAYER AND TOP LAYER AND USE OF THE SAME MATERIAL WHEN APPLYING AN INTERMEDIATE LAYER TO A SHAPED PART
PIECE MOULEE CONSTITUEE D'UNE COUCHE INTERNE ET D'UNE COUCHE DE REVETEMENT, ET UTILISATION D'UNE MATIERE DE CE TYPE LORS DE L'APPLICATION D'UNE COUCHE INTERMEDIAIRE SUR UNE PIECE MOULEE

(30) Priorität: 09.08.2004 DE 102004038765
(43) Veröffentlichungstag der Anmeldung: 02.05.2007
(73) Patentinhaber: Simona AG, 55606 Kirn (DE)
(72) Erfinder: MÜLLER, Thomas, 56242 Selters (DE)
(74) Vertreter: Tappe, Hartmut
(86) Internationale Anmeldenummer: PCT/EP2005/053922
(87) Internationale Veröffentlichungsnummer: WO 2006/015981

(56) Entgegenhaltungen:
- EP-A- 1 053 864
- DE-C1- 10 203 123
- US-A- 5 613 524
- DATABASE WPI Section Ch, Week 199105 Derwent Publications Ltd., London, GB; Class A18, AN 1991-032174 XP002350265 & JP 02 300589 A (SANYO ELECTRIC CO) 12. Dezember 1990 (1990-12-12)

## Beschreibung

Die Erfindung betrifft Die vorliegende Erfindung betrifft ein Formteil aus einer Innenschicht und einer Deckschicht, die über eine Zwischenschicht miteinander verbunden sind, wobei die Zwischenschicht eine Innenseite und eine Außenseite aufweist und die Deckschicht an der Außenseite der Zwischenschicht angeordnet ist.

Fluorkunststoffe sind Thermoplaste, deren Beständigkeit gegen Chemikalien und hohe Temperaturen mit steigendem Fluorgehalt zunimmt. Sie werden daher besonders in der Industrie eingesetzt, wo hohe Temperaturen auftreten und gefährliche Chemikalien verarbeitet werden, beispielsweise bei der Dünnsäureaufbereitung. Fluorkunststoffe verhalten sich chemisch und biologisch reaktionsträge und eignen sich daher besonders für Funktionsteile und Behälter, bei denen es auf die Reinhaltung von Reagenzien ankommt, beispielsweise für die Medizintechnik. Die Fluorkunststoffe unterscheiden sich teilweise erheblich beispielsweise in ihrer Deformationsbeständigkeit, Abriebfestigkeit, Stoßfestigkeit oder ihren dielektrischen Eigenschaften.

In Abhängigkeit von den Anforderungen an Sicherheit und Leistungsfähigkeit, beispielsweise in Abhängigkeit von den auftretenden Temperaturen oder der Reagenzienbeständigkeit, wird das verwendete Material für Formteile, beispielsweise für Rohre, aus einer Beständigkeitsliste gewählt.

Die Druckschrift DE 102 03 123 C1 beschreibt ein Verbundrohr aus einer Innenschicht aus PTFE und einer Deckschicht aus faserverstärktem Kunststoff, die über eine Zwischenlage stoff- und formschlüssig miteinander verbunden sind. Als Zwischenschicht wird PFA verwendet.

Dagegen wird die Oberfläche von Formteilen aus anderen Fluorkunststoffen wie beispielsweise Polyvinylidenfluorid zur Verbesserung der Haftung aktiviert. Diese Veränderung der Oberflächenstruktur ist aufgrund der hohen Temperatur- und Chemikalienbeständigkeit der Fluorkunststoffe aufwendig und nicht sehr dauerbeständig, so dass die Standzeiten solcher Formteile kurz sind.

Aus der Schrift JP 2300589 A ist ein Verbundrohr bekannt, bei dem zur Verbesserung der Haftung der einzelnen Schichten aneinander auf einer Innenschicht aus einem Fluorharz eine Zwischenschicht eines Copolymers aus Fluorharz und Fluorelastomer mittels Co-Extrusion aufgebracht ist, wobei nachfolgend zweier Haftschichten die Außenschicht von einem Elastomer gebildet wird.

Eine weitere Ausführung zur Leitung von verschiedensten Flüssigkeiten bzw. Gasen unter Verwendung einer Innenschicht aus einem gegenüber verschiedenste Medien beständigem Fluorpolymer ist aus der Druckschrift EP 1 053 864 A2 bekannt. Als Außenschicht wird je nach Anforderung an die erforderliche Festigkeit und Flexibilität ein hierzu geeignetes Kunststoffmaterial gewählt, wobei die Verwendung eines vom Fluorpolymer verschiedenen Materials, wie vorzugsweise Polyamid, Polyester oder Polyketone bzw. einem Copolymer dieser Stoffe erforderlich ist. Zur Sicherstellung der Haftung der einzelnen Schichten wird eine Zwischenschicht aus einem Copolymer eingesetzt, welches sich zu zumindest 25% aus dem Material der Innenschicht und zu zumindest 25% aus dem Material der Außenschicht zusammensetzt.

Problematisch ist bei der vorherigen Ausführung, dass die Erzeugung eines Innen- und Außenschicht verbindenden Copolymers aufgrund der deutlich verschiedenen Materialeigenschaften wiederum mit Problemen behaftet ist und die Materialen für Außenschicht, Innenschicht sowie der verbindenden Zwischenschicht mit Bedacht ausgewählt werden müssen und zufriedenstellende Ergebnisse hinsichtlich der Beständigkeit und Festigkeit ggf. erst nach aufwendigen Materialversuchen erzielt werden können. In Folge ist es denkbar, dass aufgrund der stofflichen Verbindung zur Zwischenschicht ein teureres Material für die Außenschicht verwendet werden muss, als dieses hinsichtlich der Festigkeitsanforderungen erforderlich wäre.

Aufgabe der Erfindung ist daher ein Formteil zu schaffen, dessen Innenschicht aus einem Fluorkunststoff ist, insbesondere aus Polyvinylidenfluorid (PVDF), EthylenChlortrifluor-Ethylen (E-CTFE), Fluor-Ethylen-Propylen (FEP) und/oder Perfluoriertem Vinyl Ether (PFA), das eine Deckschicht aufweist und das weniger aufwendig herzustellen ist, bessere Standzeiten aufweist und die notwendigen Anforderungen an Formstabilität und Druckbeständigkeit erfüllt.

Gattungsgemäß wird ein Formteil aus einer Innenschicht und einer Deckschicht, die über eine Zwischenschicht miteinander verbunden sind, eingesetzt, wobei die Zwischenschicht eine Innenseite und eine Außenseite aufweist und die Deckschicht an der Außenseite der Zwischenschicht angeordnet ist, wobei die Innenseite der Zwischenschicht aus mindestens einem artgleichem Material wie die Innenschicht besteht und mit dieser verbunden ist.

Artgleiches Material im Sinne der Erfindung sind alle Fluorkunststoffe oder Stoffgemische, die Fluorkunststoffe enthalten. Da artgleiches Material an der Innenschicht angeordnet ist, ist die Haftwirkung der Zwischenschicht an der Innenschicht sehr gut.

Die Deckschicht besteht aus einem Material, das dem Formteil die notwendige Stabilität und/oder Druckbeständigkeit verleiht, wobei weiterhin die Außenseite der Zwischenschicht aus einem Gewebe oder Gestrick ist, dass mit der Deckschicht gut verbindbar ist.

Erfindungsgemäß ist die Innenschicht aus Polyvinylidenfluorid, EthylenChlortrifluor-Ethylen, Fluor-Ethylen-Propylen und/oder perfluoriertem Vinyl Ether, wobei die darauf applizierte Zwischenschicht entlang der Innenschicht in Bahnen angeordnet ist.

Das Anordnen der Zwischenschicht in Bahnen entlang der Innenschicht ist vorteilhaft bezüglich der Scherfestigkeit des Formteils. Das Aufbringen von Bahnen ist einfach durchführbar. Eine Bahn im Sinne der Erfindung ist eine sich im Wesentlichen flächig und in einer Längsrichtung erstreckende Materialschicht, die relativ zu ihrer Länge schmal ist.

Besonders bevorzugt werden für die Innenseite der Zwischenschicht und die Innenschicht dieselben Materialen verwendet.

Besonders bevorzugt besteht das Gewebe oder Gestrick aus Polyester-, Glas- und/oder Kohlenstofffaser-Produkten, so dass die Deckschicht einfach und kostengünstig mit der Zwischenschicht stoffschlüssig verbunden werden kann. Vorteilhafterweise können außerdem auf die Außenseite der Zwischenschicht Substanzen aufgebracht werden, die den Verbund mit der Deckschicht verbessern.

Bevorzugt wird für die Deckschicht ein duraplastischer Kunststoff oder Harz verwendet. Die Dicke der Deckschicht wird vorzugsweise so lange erhöht, bis der Formkörper die für den jeweiligen Anwendungsfall nötige Stabilität aufweist.

In einer anderen bevorzugten Ausführungsform der vorliegenden Erfindung ist die Deckschicht ein mittels Glasfasern, Kohlenstofffasern und/oder mittels Polyesterfasern faserverstärkter Kunststoff, wodurch besonders die Scherfestigkeit, die Deformations- und die Stoßfestigkeit des Rohres verbessert ist und ggf. die benötigte Stabilität und/oder Druckbeständigkeit mit einem geringeren Materialeinsatz hergestellt werden kann. Polyesterfasern werden besonders bevorzugt bei Formkörpern mit einer Innenschicht aus Polyvinylidenfluorid und/oder EthylenChlortrifluor-Ethylen verwendet.

In einer bevorzugten Ausführungsform werden die Bahnen der Zwischenschicht entlang der Innenschicht spiralförmig angeordnet.

Bevorzugt weist die Innenschicht eine Wanddicke von 1-15 mm auf, besonders bevorzugt von 2-10 mm.

Ebenfalls bevorzugt weist die Zwischenschicht eine Wanddicke von 0,2 - 3,5 mm auf, bevorzugt von 0,4 - 1,5 mm.

Alle Schichten des erfindungsgemäßen Formteils werden vorzugsweise stoffschlüssig miteinander verbunden. Vorzugsweise wird mindestens eine der zu verbindenden Schichten bis zur Plastizität erwärmt und dann mit der korrespondierenden Schicht zusammengefügt. Nach dem und/oder während des Erkaltens ergibt sich dann ein Stoffschluß.

Trotz der geringen Wanddicken der Innenschicht und der Zwischenschicht ist das Formteil sehr formstabil und druckbeständig. Der Materialaufwand der Innenschicht sowie der Zwischenschicht ist gering.

Ergänzend zu der vorliegenden Erfindung wird ein Verfahren zum Anordnen einer Zwischenschicht auf eine Innenschicht eines erfindungsgemäßen Formteils vorgestellt, wobei die Innenschicht und die Zwischenschicht solange an ihrer Fügeseite erwärmt werden, bis sie plastisch sind und die Zwischenschicht dann in einem Muster auf der Innenschicht angeordnet wird. Da die Zwischenschicht und die Innenschicht erwärmt werden, bis sie plastisch sind, beispielsweise mittels Heißluft, einer Flamme, Laser oder Ultraschall, wird die Zwischenschicht beim Erkalten der beiden Schichten mit der Innenschicht verschweißt, so dass die Haftung der Zwischenschicht auf der Innenschicht stoffschlüssig und dementsprechend gut und dauerbeständig ist. Das Muster, mit dem die Zwischenschicht auf der Innenschicht des Formteils angeordnet wird, wird vorteilhaft so gewählt, dass beim Aufbringen der Zwischenschicht eine Tropfenbildung oder Materialabfluss aufgrund der Schwerkraft, beispielsweise ein Abfluss des Materials von Kanten in Ecken des Formteils, und die damit verbundenen Schichtdickenverluste oder -erhöhungen gering sind oder sogar vermieden werden. Außerdem wird das Muster vorteilhaft so gewählt, dass die mechanischen Eigenschaften des resultierenden Formteils beispielsweise dessen Scher- und/oder Druckfestigkeit erhöht wird.

Vorzugsweise erfolgt die Erwärmung partiell. Dadurch wird nur soviel Material erwärmt, wie bis zum Erkalten verarbeitet werden kann, so dass sichergestellt ist, dass die Zwischenschicht und die Innenschicht vollflächig miteinander verschweißen. Außerdem kann ein erhöhter Abfluss von Material bei partiellem Erwärmen im Wesentlichen vermieden werden.

Bevorzugt wird die Zwischenschicht unter Beaufschlagung von Druck auf der Innenschicht angeordnet, wodurch die Verbindung der Zwischenschicht mit der Innenschicht sehr gleichmäßig ist.

Das Verfahren zum Anordnen der Zwischenschicht ist einfach durchführbar und kostengünstig. Die Deckschicht kann anschließend mittels bekannter Verfahren auf die Außenseite der Zwischenschicht aufgebracht werden.

Die Verwendung von artgleichem Material zum Verschweißen einer Zwischenschicht mit einer Innenschicht aus Polyvinylidenfluorid, Ethylen-Chlortrifluor-Ethylen, Fluor-EthylenPropylen und/oder perfluoriertem Vinyl Ether zur Bildung eines Formkörpers ist besonders vorteilhaft, dadie Haftwirkung der Zwischenschicht an der Innenschicht aufgrund der Verwendung artgleichen Materials stoffschlüssig ist.

Bezüglich der Bedeutung der verwendeten Begriffe wird auf das oben gesagte verwiesen.

Im Folgenden wird die Erfindung in Figuren beschrieben. Die Figuren sind lediglich beispielhaft und schränken den allgemeinen Erfindungsgedanken nicht ein.
Figur 1 zeigt den Schichtaufbau eines erfindungsgemäßen Formteils.
Figur 2 zeigt in den Darstellungen a- c schematisch Ausschnitte aus erfindungsgemäßen Formteilen.

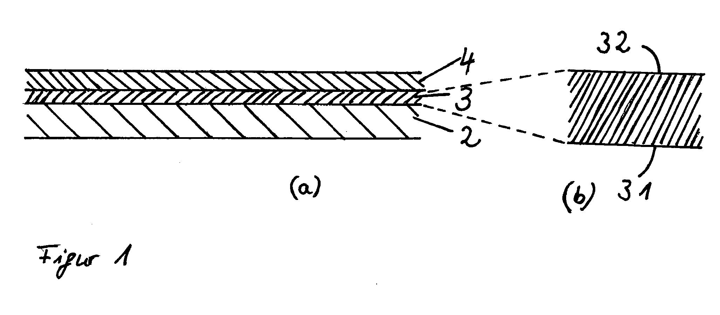

Figur 1 zeigt den Schichtaufbau eines erfindungsgemäßen Formteils. Ein erfindungsgemäßes Formteil besteht aus einer Innenschicht 2, an der eine Zwischenschicht 3, die eine Innenseite 31 und eine Außenseite 32 aufweist, mit seiner Innenseite 31 angeordnet ist. An der Außenseite 32 der Zwischenschicht 3 ist eine Deckschicht 4 angeordnet. Die Innenschicht 2 des Formteils ist aus Polyvinylidenfluorid, Ethylen-ChlortrifluorEthylen, Fluor-Ethylen-Propylen und/oder perfluoriertem Vinyl Ether. Die Innenseite 31 der Zwischenschicht 3 ist aus artgleichem Material, bevorzugt aus demselben Material. Sie wird mit der Innenschicht 2 verschweißt, indem die Innenschicht 2 und/oder die Zwischenschicht 3 an ihrer Fügeseite solange erwärmt werden, bis mindestens eine plastisch ist. Dann wird die Innenseite 31 der Zwischenschicht 3 auf der Innenschicht 2 bevorzugt in einem Muster angeordnet und auf die Innenschicht 2 gedrückt. Dadurch entsteht beim Erkalten eine sehr haftfeste, dauerbeständige und vorzugsweise gleichmäßige stoffschlüssige Schweißverbindung. Die Außenseite 32 der Zwischenschicht 3 ist aus einem Gewebe oder Gestrick aus Polyester-, Glas- oder Kohlenstofffaser-Produkten. An der Außenseite 32 wird mit herkömmlichen Verfahren eine Deckschicht 4 stoffschlüssig angeordnet, die bevorzugt faserverstärkt ist, beispielsweise mittels Glasfasern, Kohlenstofffasern und/oder, insbesondere bei Polyvinylidenfluorid und/oder Ethylen-Chlortrifluor-Ethylen, mittels Polyesterfasern. Beispielsweise wird für die Deckschicht glasfaserverstärkter Kunststoff (GFK) oder Harz verwendet.

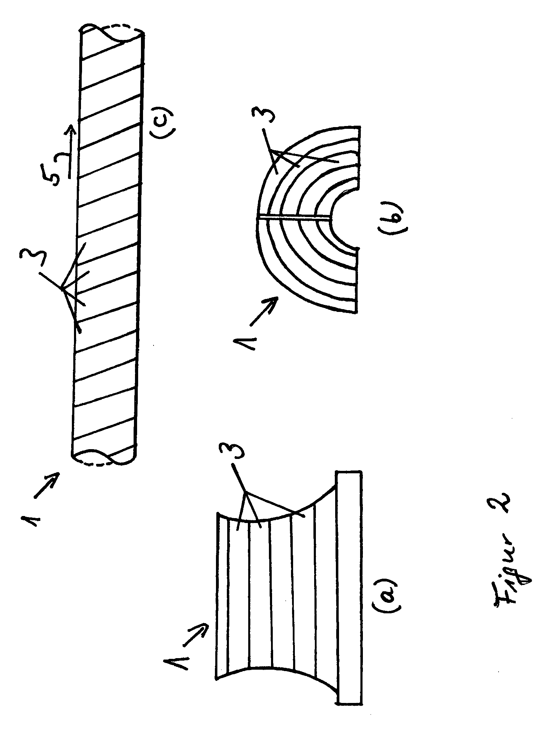

Figur 2 zeigt in den Darstellungen a- c schematisch Ausschnitte aus erfindungsgemäßen Formteilen 1. Sichtbar ist die Außenseite 32 der Zwischenschicht 3 der Formteile 1. Um die Stabilität und Druckbeständigkeit zu erhöhen, ist es vorteilhaft die Zwischenschicht 3 in einem Muster an der Innenschicht 31 anzuordnen, so dass das Formteil 1 leicht zugänglich ist, wenn die Zwischenschicht 3 auf der Innenschicht 31 angeordnet wird. Die Figuren 2a-c zeigen solche vorteilhaften Muster. Figur 2c zeigt die besonders für Rohre, sogenannte Linerrohre, vorteilhafte, entlang der Längsrichtung des Rohres spiralförmige Anordnung der Zwischenschicht 3. Die Längsrichtung des Rohres ist durch einen Pfeil 5 angedeutet. Die Zwischenschicht 3 wird vorteilhaft in Bahnen, mit sogenannten Capstrips, auf der Innenschicht 2 angeordnet.

### Bezugszeichenliste:

- 1: Formkörper
- 2: Innenschicht
- 3: Zwischenschicht
- 31: Innenseite der Zwischenschicht
- 32: Außenseite der Zwischenschicht
- 4: Deckschicht
- 5: Längsrichtung des Formkörpers

## Patentansprüche

1. Formteil (1) aus einer Innenschicht (2) und einer Deckschicht (4), die über eine Zwischenschicht (3) miteinander verbunden sind, wobei die Zwischenschicht (3) eine Innenseite (31) und eine Außenseite (32) aufweist, wobei die Deckschicht an der Außenseite (32) der Zwischenschicht (3) angeordnet ist, wobei die Innenseite (31) der Zwischenschicht (3) aus einem artgleichem Material wie die Innenschicht (2) besteht und mit dieser verbunden ist, wobei die Deckschicht (4) aus einem Material ist, das dem Formteil (1) die notwendige Stabilität und Druckbeständigkeit verleiht, wobei die Außenseite (32) der Zwischenschicht (3) aus einem mit der Deckschicht (4) verbindbaren Gewebe oder Gestrick ist,
**dadurch gekennzeichnet,**
**dass** die Innenschicht (2) aus Polyvinylidenfluorid, EthylenChlortrifluor-Ethylen, Fluor-Ethylen-Propylen und/oder perfluoriertem Vinyl Ether ist, wobei die Zwischenschicht (3) entlang der Innenschicht (2) in Bahnen angeordnet ist.

2. Formteil (1) nach Anspruch 1,
**dadurch gekennzeichnet,**
**dass** die Außenseite (32) der Zwischenschicht (3) aus Polyester-, Glas- und/oder Kohlenstofffaser-Produkten ist.

3. Formteil (1) nach,einem der vorherigen Ansprüche,
**dadurch gekennzeichnet,**
**dass** die Deckschicht (4) mittels Glasfasern, Kohlenstofffasern und/oder mittels Polyesterfasern faserverstärkt ist.

4. Formteil (1) nach einem der vorherigen Ansprüche,
**dadurch gekennzeichnet,**
**dass** die Zwischenschicht (3) entlang der Innenschicht (2) in spiralförmigen Bahnen angeordnet ist.

5. Formteil (1) nach einem der vorherigen Ansprüche,
**dadurch gekennzeichnet,**
**dass** die Innenschicht (2) eine Wanddicke von 1-15 mm aufweist, bevorzugt von 2-10 mm.

6. Formteil (1) nach einem der vorherigen Ansprüche,
**dadurch gekennzeichnet,**
**dass** die Zwischenschicht (3) eine Wanddicke von 0,2 - 3,5 mm aufweist, bevorzugt von 0,4 - 1,5 mm.

## Claims

1. A moulded part (1) comprised of an inner layer (2) and a top layer (4), which are connected to each other by an intermediate layer (3), the intermediate layer (3) having an inner side (31) and an outer side (32), the top layer being arranged on the outer side (32) of the intermediate layer (3), the inner side (31) of the intermediate layer (3) being made of the same type of material as the inner layer (2) and being connected to the latter, the top layer (4) being made of a material that provides the moulded part (1) with the necessary stability and pressure resistance, the outer side (32) of the intermediate layer (3) being made of a tissue or knitted fabric connectable to the top layer (4),
**characterised in that**
the inner layer (2) is made of polyvinylidene fluoride, ethylene chlorotrifluoroethylene, fluorinated ethylene propylene and/or perfluorinated vinyl ether, the intermediate layer (3) being arranged in webs along the inner layer (2).

2. The moulded part (1) according to claim 1,
**characterised in that**
the outer side (32) of the intermediate layer (3) is made of polyester products, glass products and/or carbon fibre products.

3. The moulded part (1) according to any of the preceding claims,
**characterised in that**
the top layer (4) is fibre-reinforced by means of glass fibres, carbon fibres and/or by means of polyester fibres.

4. The moulded part (1) according to any of the preceding claims,
**characterised in that**
the intermediate layer (3) is arranged in spiral webs along the inner layer (2).

5. The moulded part (1) according to any of the preceding claims,
**characterised in that**
the inner layer (2) has a wall thickness of 1 - 15 mm, preferably of 2-10 mm.

6. The moulded part (1) according to any of the preceding claims,
**characterised in that**
the intermediate layer (3) has a wall thickness of 0.2 - 3.5 mm, preferably of 0.4 - 1.5 mm.

## Revendications

1. Pièce moulée (1) composée d'une couche intérieure (2) et d'une couche supérieure (4) qui sont reliées l'une à l'autre par une couche intermédiaire (3), la couche intermédiaire (3) ayant un côté intérieur (31) et un côté extérieur (32), la couche supérieure étant agencée du côté extérieur (32) de la couche intermédiaire (3), le côté intérieur (31) de la couche intermédiaire (3) se composant d'un matériau du même type que la couche intérieure (2) et étant relié à celle-ci, la couche supérieure (4) se composant d'un matériau qui confère à la pièce moulée (1) la stabilité et la résistance à la pression nécessaires, le côté extérieur (32) de la couche intermédiaire (3) se composant d'un tissu ou tricot pouvant être relié à la couche supérieure (4),
**caractérisée en ce que**
la couche intérieure (2) se compose du polyfluorure de vinylidène, de l'éthylène-chlorotrifluoroéthylène, de l'éthylène-propylène fluoré et/ou de l'éther vinylique perfluoré, la couche intermédiaire (3) étant agencée en bandes le long de la couche intérieure (2).

2. Pièce moulée (1) selon la revendication 1,
**caractérisée en ce que**
le côté extérieur (32) de la couche intermédiaire se compose de produits en polyester, en verre et/ou en fibres de carbone.

3. Pièce moulée (1) selon l'une quelconque des revendications précédentes,
**caractérisée en ce que**
la couche supérieure (4) est renforcée par des fibres au moyen de fibres de verre, de fibres de carbone et/ou au moyen de fibres de polyester.

4. Pièce moulée (1) selon l'une quelconque des revendications précédentes,
**caractérisée en ce que**
la couche intermédiaire (3) est agencée en bandes spiroïdales le long de la couche intérieure (2).

5. Pièce moulée (1) selon l'une quelconque des revendications précédentes,
**caractérisée en ce que**
la couche intérieure (2) a une épaisseur de la paroi de 1 - 15 mm, de préférence de 2 - 10 mm.

6. Pièce moulée (1) selon l'une quelconque des revendications précédentes,
**caractérisée en ce que**
la couche intermédiaire (3) a une épaisseur de la paroi de 0,2 - 3,5 mm, de préférence de 0,4 - 1,5 mm.
